# EUROPÄISCHE PATENTSCHRIFT

(11) **EP 3 924 847 B1**
(45) Veröffentlichungstag und Bekanntmachung des Hinweises auf die Patenterteilung: **07.05.2025**
(21) Anmeldenummer: 20703738.3
(22) Anmeldetag: 05.02.2020
(51) Int. Cl.: G06F 21/12

(54) **VERFAHREN ZUR LIZENZIERUNG EINER TOOLKETTE**
METHOD FOR LICENSING A TOOL CHAIN
PROCÉDÉ D'ATTRIBUTION DE LICENCE À UNE CHAÎNE D'OUTILS

(30) Priorität: 12.02.2019 DE 102019103445
(43) Veröffentlichungstag der Anmeldung: 22.12.2021
(73) Patentinhaber: dSPACE GmbH, 33102 Paderborn (DE)
(72) Erfinder: SCHÄFERGOCKEL, Guido, 33106 Paderborn (DE); NISSEN, Matthias, 33102 Paderborn (DE)
(86) Internationale Anmeldenummer: PCT/EP2020/052801
(87) Internationale Veröffentlichungsnummer: WO 2020/164980

(56) Entgegenhaltungen:
- EP-A2- 2 284 753
- RÜDIGER KÜGLER: "White Paper CodeMeter in Virtual Environments", 31 December 2016 (2016-12-31), XP055689090, Retrieved from the Internet <URL:https://www.wibu.com/fileadmin/wibu_downloads/White_Papers/CodeMeter_in_virtual_environments/CodeMeter_in_virtual_Environments_web_Final.pdf> [retrieved on 20200424]
- WIBU-SYSTEMS AG: "CodeMeter | CmRuntime: Wibu Systems", 30 June 2017 (2017-06-30), XP055689133, Retrieved from the Internet <URL:https://web.archive.org/web/20170630091756/https://www.wibu.com/codemeter/codemeter-runtime.html> [retrieved on 20200424]
- WIBU-SYSTEMS AG: "CodeMeter License Models: Wibu Systems", 30 June 2017 (2017-06-30), XP055689148, Retrieved from the Internet <URL:https://web.archive.org/web/20170630094459/https://www.wibu.com/codemeter/license-models.html> [retrieved on 20200424]

## Beschreibung

Die Erfindung betrifft ein Verfahren zur nutzungsbasierten Lizenzierung von einer oder mehreren Anwendungen in einem Container, ein Computersystem umfassend einen Bedienrechner, einen Lizenzserver und eine Vielzahl von Arbeitsrechnern sowie ein Computerprogrammprodukt.

Bei der Entwicklung von komplexen Produkten sind eine Vielzahl von Tests erforderlich, um ein sicheres und zuverlässiges Funktionieren zu gewährleisten. Da die Kosten für die Fehlerbehebung umso höher sind, je später ein Fehler festgestellt wird, werden beispielsweise Komponenten von Kraftfahrzeugen, wie insbesondere Steuergeräte, vor Fertigstellung des gesamten Produkts in einer Hardware-in-the-Loop-Simulation getestet. Hierbei wird in Echtzeit das physikalische System simuliert und eine korrekte Reaktion des Steuergeräts überprüft, was aber teure Echtzeit-Simulations-Rechner erfordert und auch zeitaufwändig ist. In zunehmendem Maße wird es möglich, bereits ohne das Vorhandensein von Hardware etliche Funktionen eines Steuergeräts zu testen. Beispielsweise kann die Firmware eines Steuergeräts zur Verarbeitung von Sensordaten in einem Kraftfahrzeug mittels einer "virtuellen Testfahrt" überprüft werden, wobei für die Simulation in der Regel eine Vielzahl von Softwareanwendungen zusammenwirken.

Ein aussagekräftiger Test von aufwändigen Funktionen wie einer autonomen Führung eines Kraftfahrzeugs erfordert hierbei derart viel Rechenleistung, dass eine Vielzahl von Rechnern gleichzeitig eingesetzt werden müssen. Dazu kann ein lokaler Cluster von Rechnern vorgehalten oder im Rahmen des Cloud Computing bei einem Infrastrukturanbieter gemietet werden. Die Softwareanwendungen für einen Testfall werden in einem Container, wie beispielsweise einer virtuellen Maschine, paketiert und je nach Bedarf auf einer Vielzahl von Rechnern ausgeführt. Für Softwarehersteller stellt sich dabei die Frage, wie die Lizenzierung der teuren und spezialisierten Softwareanwendungen auch in einem solchen Cloud-Umfeld gewährleistet werden kann.

Aus dem Stand der Technik sind verschiedene Ansätze zur Lizenzierung von Software in Containern bekannt, wie beispielsweise das Modifizieren von verbreiteten Mechanismen zur Bindung der Software an einen bestimmten Computer über ein oder mehrere Hardwaremerkmale. Insbesondere kann es vorgesehen sein, dass ein auf dem Host-Betriebssystem ausgeführtes Programm auf den physischen Computer zugreift und die erhaltenen Merkmale den virtuellen Maschinen zur Verfügung stellt, wobei in der Regel eine Begrenzung der gleichzeitig ausgeführten virtuellen Maschinen stattfindet. Nachteilhaft ist unter anderem, dass dieser Ansatz für Anwendungen mit einer stark schwankenden Anzahl von benötigten Rechnern zu unflexibel ist.

Ein weiterer Ansatz zur Lizenzierung basiert auf einer Anpassung des Hypervisors bzw. der Cloud-Infrastruktur; nachteilhaft ist hierbei insbesondere die Bindung an einen bestimmten Anbieter bzw. das Erfordernis einer vertrauenswürdigen Cloud. Beispielsweise offenbart die EP 2480966 B1 ein Verfahren zur nutzungsbasierten Lizenzierung von Anwendungen in einer virtuellen Hypervisor-Ausführungsumgebung, in dem beim Erzeugen bootfähiger Maschinen-Images mehrere lizenzierbare Komponenten kombiniert und als Metadaten Gewichtungen für die mehreren lizenzierbaren Komponenten eingebettet werden. Der Hypervisor aggregiert telemetrische Informationen und übermittelt diese an ein Management-Framework, welches die Metadaten zum Ermitteln einer Nutzung der einzelnen Komponenten und zur Lizenzierung der Nutzung verwendet. In einer Ausführung ist es vorgesehen, einer Instanz des Maschinen-Images initiale Nutzungseinheiten zuzuordnen. In der US 2014/0040343 A1 ist eine global verteilte Computing Cloud umfassend beschrieben; eine zentrale Verwaltungskomponente ermöglicht die Authentifizierung von Nutzern und das Erfassen von Nutzungsinformationen.

Aus der US 2013/0179984 A1 ist ein Verfahren zum Steuern der Ausführung einer Anwendung auf einem Computersystem bekannt, bei dem anhand einer gegebenen Lizenz ein Lizenzplan erstellt wird. Der Lizenzplan umfasst Informationen darüber, welcher Nutzer die betreffende Anwendung ausführen darf. Auf dem Computer System befindet sich ein Lizenz-Client, der den Lizenzplan von einem Lizenz-Server empfängt. Basierend auf dem Lizenzplan entscheidet der Lizenz-Client, ob ein Nutzer die Anwendung ausführen darf. Der Lizenzplan kann eine beschränkte Gültigkeitsdauer aufweisen, wobei die Gültigkeitsdauer anhand erfasster Nutzungsdaten angepasst werden kann. Die US 9588795 B2 offenbart ein Verfahren für das Überwachen der Ressourcenzuteilung und Protokollieren der Nutzung in einer virtualisierten Umgebung, bei dem unter Berücksichtigung der unterschiedlichen Prozessorleistung verschiedener Prozessoren die Übernutzung einer Lizenz erkannt und ein gesicherter Bericht erstellt wird.

In dem Whitepaper "CodeMeter in Virtual Environments" von Rüdiger Kügler, Wibu Systems, werden verschiedene Möglichkeiten der Lizenzierung von Software in virtuellen Maschinen diskutiert. Als Lizenzcontainer können dabei physikalische Dongles oder an die Host-Hardware gebundene verschlüsselte Lizenzdateien eingesetzt werden. Indem die Anzahl verwendeter Lizenzen gezählt wird, kann eine Übernutzung verhindert werden.

Vor diesem Hintergrund besteht die Aufgabe der Erfindung darin, ein Verfahren und eine Vorrichtung anzugeben, welche eine flexible Lizenzierung von Softwareanwendungen in Containern ermöglicht. Insbesondere wäre eine nutzungsabhängige Lizenzierung wünschenswert, die bevorzugt auch in einer privaten Cloud anwendbar ist.

Diese Aufgabe wird durch ein Verfahren zur nutzungsbasierten Lizenzierung mit den Merkmalen von Anspruch 1 und ein Computersystem mit den Merkmalen von Anspruch 7 gelöst. Vorteilhafte Ausgestaltungen der Erfindung sind Gegenstand von abhängigen Unteransprüchen.

Erfindungsgemäß wird also ein Verfahren zur nutzungsbasierten Lizenzierung von einer oder mehreren Anwendungen in einem Container bereitgestellt, bei dem der Container ein Lizenzmodul umfasst, wobei eine Anwendung das Vorhandensein einer Anwendungslizenz über das Lizenzmodul abfragt und nur bei vorhandener Anwendungslizenz ausgeführt wird. In dem Lizenzmodul ist eine Verknüpfung von einer oder mehreren Anwendungslizenzen mit einem eindeutigen Kennzeichen hinterlegt. Der Container umfasst ein Abrechnungsmodul, welches bei einer externen Lizenzquelle eine Nutzungseinheit abruft und für die Dauer einer erhaltenen Nutzungseinheit das eindeutige Kennzeichen in einem gesicherten Datenspeicher bereitstellt. Während dieser Zeit können alle die Anwendungen ausgeführt werden, deren Anwendungslizenz mit dem Kennzeichen verknüpft ist.

Die Erfindung ist mit verschiedenen Arten von Containern einsetzbar. So kann der Container als eine virtuelle Maschine ausgeführt sein, die ein Betriebssystem umfasst und auf einer virtuellen Hardware ausgeführt wird; alternativ kann der Container auch auf die Mechanismen des Host-Betriebssystems zugreifen, beispielsweise ein Docker-Container sein. Weiterhin kann es sich bei dem Container auch um ein Abbild eines eingebetteten Systems handeln. Die Anwendungen im Container prüfen das Vorhandensein einer Lizenz beim Start oder der Nutzung einer bestimmten Funktionalität. Zweckmäßigerweise erfolgt ab diesem Zeitpunkt regelmäßig, also in festen Zeitabständen, eine erneute Lizenzprüfung durch die Anwendung, insbesondere mit einer Periode von einer Minute oder kürzer. Der gesicherte Datenspeicher kann beispielsweise als eine versteckte Datei im Dateisystem des Containers realisiert sein, wobei der Inhalt des Datenspeichers insbesondere durch Verschlüsseln oder Signieren gesichert ist, so dass Manipulation erkannt werden können.

Vorteilhafterweise ermöglicht das erfindungsgemäße Verfahren eine nutzungsbasierte Lizenzierung von Anwendungen in einem Container, wobei ein Wechsel des Lizenzmodells ohne Anpassung an dem Binärcode der einzelnen Anwendungen erfolgen kann: Für die Einzelplatzlizenzierung kann das Lizenzmodul auf einen Hardware-Dongle zurückgreifen, während dieser für die Lizenzierung im Container durch das Abrechnungsmodul und die Verbindung zu einer Lizenzquelle ersetzt wird. Die Lizenzquelle kann beispielsweise als Lizenzserver in einem lokalen Netzwerk ausgestaltet sein oder als kryptografisch gesichertes dediziertes Hardware-Modul mit Zähler ausgeführt sein. Für den Betrieb und die sichere Abrechnung ist keine vertrauenswürdige Infrastruktur bzw. ein Vertrag mit einem Cloud-Anbieter erforderlich, die Lizenzquelle kann aber auch als ein Metrik-Software-Modul einer Cloud-Infrastruktur ausgeführt sein. Das als gesonderte Komponente im Container realisierte Abrechnungsmodul kann auch unabhängig von einer Virtualisierung eingesetzt werden. Die Lizenzierung einer Anwendung über das eindeutige Kennzeichen kann somit unabhängig von einer nutzerbasierten Abrechnung beibehalten werden. Indem das Abrechnungsmodul als Adapter angepasst wird, bleibt die aktuell realisierte Umgebung für die einzelne Softwareanwendung transparent. Durch die Trennung des eindeutigen Kennzeichens, welches die Ausführung einer lizenzierten Anwendung ermöglicht, vom Vorhandensein und der konkreten Implementierung des Abrufs von Nutzungseinheiten, können verschiedene Lizenzmodelle mit geringem Aufwand umgesetzt werden.

Bevorzugt ist das eindeutige Kennzeichen mit einer Gültigkeitsdauer versehen und wird nach Ablauf der Gültigkeitsdauer nicht mehr akzeptiert. Anspruchsgemäß ruft das Abrechnungsmodul periodisch neue Nutzungseinheiten ab, solange der Container ausgeführt wird; wenn keine Nutzungseinheit erhalten wurde, stellt das Abrechnungsmodul kein eindeutiges Kennzeichen mehr bereit bzw. löscht das eindeutige Kennzeichen aus dem Datenspeicher. Zweckmäßigerweise erfolgt das Abrufen der Nutzungseinheiten eine vorbestimmte Zeitdauer vor Ablauf des eindeutigen Kennzeichens. Das Abrechnungsmodul muss dabei nicht durch (aufwändige) dedizierte Mechanismen mit den Anwendungen verknüpft sein, sondern kann zeitgesteuert den Abruf einer neuen Nutzungseinheit vornehmen und den Ablaufzeitpunkt des eindeutigen Kennzeichens aktualisieren bzw. um die Dauer der abgerufenen und erhaltenen Nutzungseinheit verlängern. Die Dauer bzw. das Zeitintervall bis zum Ablauf des eindeutigen Kennzeichens ist in gewissen Grenzen wählbar und kann beispielsweise bei einigen Minuten liegen. Beispielsweise könnte das Abrechnungsmodul jede Minute eine Nutzungseinheit abrufen, wobei das eindeutige Kennzeichen jeweils für maximal drei Minuten gültig ist. Somit führt eine kurzfristige Netzwerkunterbrechung nicht zu Problemen beim Ausführen der Toolkette, während gleichzeitig im Falle eines Umgehungsversuchs eine Übernutzung der Anwendungen auf wenige Minuten begrenzt ist.

Vorzugsweise akzeptiert das Abrechnungsmodul eine abgerufene Nutzungseinheit nur dann als erhaltene Nutzungseinheit, wenn die externe Lizenzquelle sich als vertrauenswürdig authentifiziert. Dies kann anhand eines vorher vereinbarten Geheimnisses erfolgen, beispielsweise in einem Challenge-Response-Verfahren oder anhand der Echtheitsprüfung einer Signatur.

Bevorzugt protokolliert die externe Lizenzquelle abgerufene Nutzungseinheiten, so dass ein vorab bereitgestelltes Guthaben verringert wird und/oder eine Abrechnung über die Anzahl verbrauchter Nutzungseinheiten erfolgt. Zweckmäßigerweise kann auch eine Aufschlüsselung der Abrechnung erfolgen, wenn mehrere Gruppen von Softwareanwendungen definiert sind, wobei die Abrechnung insbesondere eine Übersicht über die Nutzungsdauer für die einzelnen Gruppen von Anwendungen und dem jeweils damit verknüpften Preis enthält.

Vorzugsweise enthält das Lizenzmodul bzw. ein gesicherter Datenbereich des Lizenzmoduls mehrere Gruppen von Verknüpfungen, wobei eine erste Gruppe von Anwendungslizenzen mit einem ersten eindeutigen Kennzeichen verknüpft ist und eine zweite Gruppe von Anwendungen mit einem zweiten eindeutigen Kennzeichen verknüpft ist, wobei das Abrechnungsmodul eine erste Nutzungseinheit oder eine zweite Nutzungseinheit bei der externen Lizenzquelle abruft, und wobei das Abrechnungsmodul je nach abgerufener und erhaltener Nutzungseinheit das erste oder das zweite eindeutige Kennzeichen bereitstellt. Durch eine einfache Anpassung der in dem Datenspeicher hinterlegten Gruppe von Softwareanwendungen können - ohne Modifikation am Binärcode der einzelnen Softwareanwendung - verschiedenste Toolketten definiert bzw. verschiedenste Anwendungsfälle auf einfache Weise unterstützt werden.

Besonders bevorzugt kann auch vorgesehen sein, dass der gesicherte Datenspeicher mehrere eindeutige Kennzeichen umfassen kann bzw. umfasst; das Abrechnungsmodul kann somit mehrere Nutzungseinheiten parallel anfordern und entsprechend der erhaltenen Nutzungseinheiten parallel mehrere Kennzeichen bereitstellen. Dies ermöglicht es, mehrere Toolketten gleichzeitig auszuführen, wobei die Nutzungseinheiten synchronisiert oder zeitlich versetzt angefordert werden können.

Die Erfindung betrifft ferner ein Computersystem umfassend einen Bedienrechner mit einer Mensch-Maschine-Schnittstelle, einen Lizenzserver als Lizenzquelle und eine Vielzahl von Arbeitsrechnern. Jeder Arbeitsrechner umfasst einen Prozessor, einen Arbeitsspeicher sowie eine Schnittstelle, und ist dazu eingerichtet, ein erfindungsgemäßes Verfahren auszuführen.

Der Lizenzserver kann wie ein an sich bekannter Lizenzserver im lokalen Netzwerk ausgeführt sein (auch unter dem Begriff Floating Network License Server bekannt). Aber auch andere Ausführungen eines Lizenzservers sind denkbar, solange eine sichere Hinterlegung des Verbrauchs gewährleistet ist - wie beispielsweise in Form eines Trusted Platform Moduls.

In einer alternativen Ausführung haben Nutzungseinheiten eine sehr lange (z.B. ein Jahr) oder eine unbegrenzte Gültigkeit. Dann kann das Abrufen von Nutzungseinheiten dazu dienen, die Anzahl von Computern zu zählen, auf denen eine Softwarekomponente ausgeführt wird. Somit würde der Lizenzserver Softwareaktivierungen anstelle von Laufzeit zählen. Hierbei kann auch vorgesehen sein, eine begrenzte Anzahl von Aktivierungen der Softwarekomponente zu gestatten. Wird eine vorgegebene Maximalzahl überschritten, muss zweckmäßigerweise eine manuelle Überprüfung erfolgen. Dadurch kann eine automatische Lizenzierung beispielsweise auch für solche Computer erfolgen, die für längere Perioden keine Netzverbindung besitzen. Somit kann auch eine Auslieferung einer Softwarekomponente mit nachträglicher bedarfsabhängiger Lizenzierung erfolgen.

Weiterhin betrifft die Erfindung ein Computerprogrammprodukt mit einem computerlesbaren Speichermedium, auf dem Befehle eingebettet sind, die, wenn sie von einer Recheneinheit ausgeführt werden, bewirken, dass die Recheneinheit dazu eingerichtet ist, ein erfindungsgemäßes Verfahren auszuführen.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Abmessungen sind nicht maßstäblich und weisen, sofern nicht anders angegeben, auch keine ableitbaren geometrischen Relationen zueinander auf.

Darin zeigt:
- Figur 1: eine bevorzugte Ausführungsform eines Bedienrechners,
- Figur 2: eine schematische Darstellung einer Simulation in einem Cluster, und
- Figur 3: eine bevorzugte Ausführungsform eines Containers.

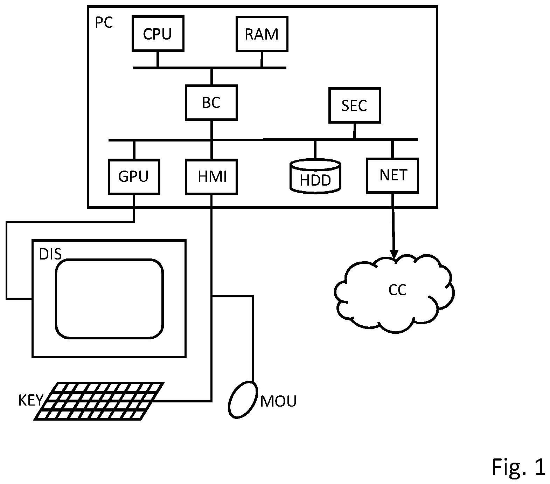

Figur 1 zeigt eine bevorzugte Ausführungsform eines Bedienrechners PC. Dieser weist einen Prozessor CPU, der insbesondere als Mehrkernprozessor realisiert sein kann, einen Arbeitsspeicher RAM und einen Buscontroller BC auf. Bevorzugt ist der Bedienrechner PC dazu ausgelegt, von einem Nutzer direkt manuell bedient zu werden, wobei über eine Grafikkarte GPU ein Monitor DIS und über eine Peripherieschnittstelle HMI eine Tastatur KEY und eine Maus MOU angeschlossen sind. Prinzipiell könnte der Bedienrechner PC auch ein Touch-Interface aufweisen. Der Bedienrechner umfasst weiterhin einen nichtflüchtigen Datenspeicher HDD, der insbesondere als Festplatte und/oder Solid State Disk ausgeführt sein kann, sowie eine Schnittstelle NET, insbesondere eine Netzwerkschnittstelle. Über die Schnittstelle NET können weitere Rechner, wie insbesondere ein Cluster von Computern CC angeschlossen werden. Prinzipiell können ein oder mehrere beliebige Schnittstellen, insbesondere drahtgebundene Schnittstellen, an dem Bedienrechner PC vorhanden und jeweils für die Verbindung mit weiteren Rechnern einsetzbar sein. Zweckmäßigerweise kann eine Netzwerkschnittstelle nach dem Ethernet-Standard verwendet werden, wobei zumindest die physikalische Schicht standardkonform ausgeführt ist; eine oder mehrere höhere Protokollschichten können auch proprietär bzw. an den Prozessrechner angepasst implementiert sein. Die Schnittstelle NET kann auch drahtlos ausgeführt sein, wie insbesondere als WLAN-Schnittstelle oder nach einem Standard wie Bluetooth. Hierbei kann es sich auch um eine Mobilfunkverbindung wie LTE handeln, wobei vorzugsweise die ausgetauschten Daten verschlüsselt sind. Es ist vorteilhaft, wenn zumindest eine Schnittstelle des Bedienrechners als Standard-Ethernet-Schnittstelle ausgeführt ist, so dass weitere Rechner einfach mit dem Bedienrechner PC verbunden werden können.

Vorzugsweise kann der Bedienrechner PC einen gesicherten Datencontainer SEC aufweisen. Dies ermöglicht zum einen die Verwendung lizenzierter Anwendungen auf dem Bedienrechner selbst, zum anderen aber auch die Verwendung des Bedienrechners als Lizenzserver, wobei Abrechnungsdaten in dem gesicherten Datencontainer hinterlegt werden. Dieser kann beispielsweise in Form eines Dongles realisiert sein, der insbesondere mit einer Peripherieschnittstelle verbunden ist. Alternativ kann es auch vorgesehen sein, einen gesicherten Datencontainer SEC als Bauteil fest in dem Bedienrechner zu integrieren oder in Form einer Datei auf dem nichtflüchtigen Datenspeicher HDD zu hinterlegen, wobei der Inhalt zweckmäßigerweise durch Mechanismen des Betriebssystems und/oder ein geeignetes Verwaltungsprogramm vor unbefugten Zugriffen bzw. Manipulationen geschützt wird.

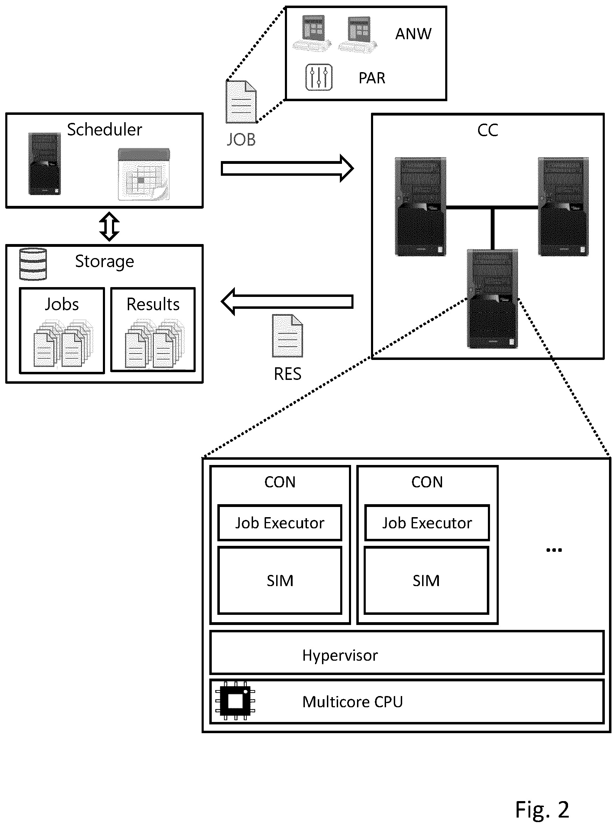

In Figur 2 ist ein Schema zur Ausführung einer Vielzahl von Tests auf einem Computer-Cluster CC dargestellt. Auf dem Bedienrechner befindet sich ein Scheduler, der eine Wahl der Ausführungszeiten, -prioritäten und Reihenfolgen der einzelnen Anwendungen oder verschiedenen Toolketten ermöglicht. Dieser übermittelt verschiedene Aufträge JOB an den Computer-Cluster CC, wobei ein Auftrag die auszuführenden Anwendungen und erforderliche Daten bzw. Parameter PAR wie beispielsweise für die Simulation erforderliche Stimuli umfasst. Die Rechner des Computer-Clusters CC sind zweckmäßigerweise zur parallelen Ausführung von mehreren Containern CON, wie insbesondere virtuellen Maschinen eingerichtet, indem auf dem Prozessor, insbesondere einer Multicore CPU, des einzelnen Rechners ein Hypervisor ausgeführt wird. Der Container CON umfasst bevorzugt einen Job Executor, der anhand der übermittelten Aufträge die gewünschten Softwareanwendungen bzw. Toolketten startet und mit den benötigten Daten versorgt. Eine der ausgeführten Softwareanwendungen kann beispielsweise eine Simulationsumgebung SIM sein, in der virtuelle Steuergeräte bzw. verschiedene gekapselte Modelle ausgeführt werden. Der Job Executor protokolliert die Ergebnisse RES und sendet diese nach erfolgreicher Ausführung an einen Datenspeicher Storage, der insbesondere auch im Bedienrechner angeordnet sein kann. In dem Datenspeicher Storage können die ausgeführten Aufträge bzw. Jobs und die erhaltenen Resultate gespeichert und für eine spätere Auswertung bereitgestellt werden.

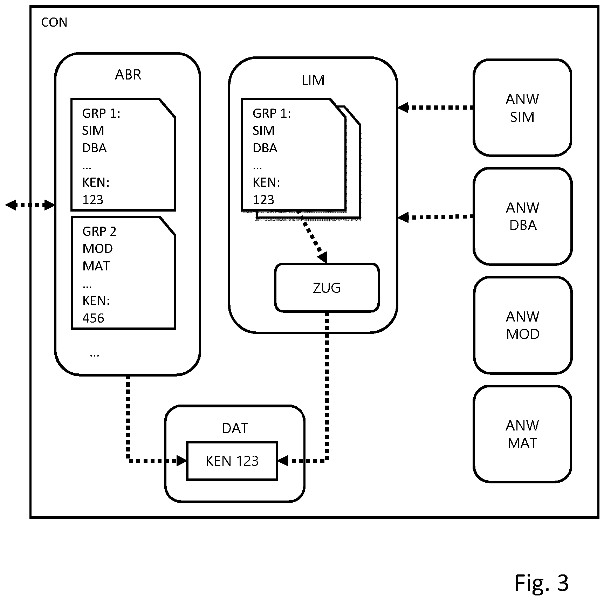

Figur 3 zeigt eine bevorzugte Ausführungsform eines erfindungsgemäßen Containers.

Der Container CON umfasst eine prinzipiell beliebige Anzahl lizenzierter Softwareanwendungen ANW, von denen hier beispielhaft eine Simulationsumgebung SIM, eine Datenbank DBA, ein Umgebungsmodell MOD und eine technische Rechenumgebung MAT dargestellt sind. Die verschiedenen Anwendungen ANW SIM, DBA, MOD und MAT sind dazu eingerichtet, über ein Lizenzmodul LIM das Vorhandensein einer Anwendungslizenz abzufragen. Nur bei Vorhandensein einer Lizenz für die entsprechende Anwendung wird diese überhaupt bzw. mit allen Features ausgeführt. In Kombination mit einem handelsüblichen Dongle könnten die Anwendungen ohne Änderungen am Binärcode auf einem einzelnen Standard-PC ausgeführt werden. Das Lizenzmodul LIM umfasst einen geschützten Datenbereich, in dem eine Verknüpfung mehrerer Anwendungslizenzen mit einem eindeutigen Kennzeichen hinterlegt ist. Die Hinterlegung kann auch durch das Einbinden eines signierten Plugins für eine Anwendungs-Schnittstelle des Lizenzmoduls erfolgen, wobei in dem Plugin dann eine oder mehrere Gruppen von Anwendungen definiert und mit einem eindeutigen Kennzeichen verknüpft sind. Beispielsweise kann eine Gruppe von Anwendungen GRP1 definiert sein, welche die Simulationsumgebung SIM und die Datenbank DBA umfasst und mit dem eindeutigen Kennzeichen KEN 123 verknüpft ist. Über ein Zugriffsmodul ZUG kann das Lizenzmodul auf einen gesicherten Datenspeicher DAT zugreifen, welcher eine beliebige Anzahl von eindeutigen Kennzeichen enthält. Das Zugriffsmodul kann eine Entschlüsselungskomponente und/oder eine Zeitstempelüberprüfung umfassen. Der gesicherte Datenspeicher DAT kann insbesondere als verschlüsselte Datei im Dateisystems hinterlegt sein, wobei ein Zugriff auf die Information beispielsweise nur bei Kenntnis des Schlüssels möglich ist und/oder die Authentizität des Inhalts anhand einer Signatur verifiziert wird.

Weiterhin umfasst der Container CON ein Abrechnungsmodul ABR, welches in einem geschützten Datenbereich auch die Verknüpfung einer Anzahl von Anwendungen mit einem eindeutigen Kennzeichen enthält. Beispielsweise kann eine erste Toolkette GRP1 als Anwendungen die Simulationsumgebung SIM sowie die Datenbank DBA umfassen und mit einem ersten eindeutigen Kennzeichen KEN 123 verknüpft sein, während eine zweite Toolkette GRP2 als Anwendungen das Umgebungsmodell MOD und die Rechenumgebung MAT umfassen und mit einem zweiten eindeutigen Kennzeichen KEN 456 verknüpft sein kann.

Das Abrechnungsmodul kann über eine Datenverbindung, insbesondere eine Netzwerkverbindung mit einer hier nicht dargestellten Lizenzquelle kommunizieren. Je nach Einstellung bzw. Bedarf wird es dabei eine Nutzungseinheit für die erste Toolkette und/oder die zweite Toolkette anfordern. Die Einstellung kann beispielsweise über eine Konfigurationsdatei erfolgen, oder das Abrechnungsmodul könnte mit einem den Bedarf anzeigenden Parameter aufgerufen werden. Wenn sich die Lizenzquelle (beispielsweise mittels eines Challenge-Response-Verfahrens) gegenüber dem Abrechnungsmodul authentifiziert und dieses Nutzungseinheit erhält, so stellt das Abrechnungsmodul in dem gesicherten Datenbereich DAT das (bzw. die) entsprechende eindeutige Kennzeichen(n) bereit; hier ist beispielhaft das erste eindeutige Kennzeichen KEN 123 dargestellt.

Wird die Simulationsumgebung SIM gestartet, so prüft sie über das Lizenzmodul das Vorhandensein einer Anwendungslizenz ab. Im gesicherten Datenspeicher DAT ist das eindeutige Kennzeichen KEN 123 hinterlegt. Anhand der im geschützten Datenbereich des Lizenzmoduls hinterlegten Liste von Verknüpfungen erkennt das Lizenzmodul, dass ein vorhandenes Kennzeichen KEN 123 eine Anwendungslizenz für die Simulationsumgebung SIM anzeigt. Nach der Freigabe durch das Lizenzmodul kann die Simulationsumgebung ausgeführt werden; zweckmäßigerweise wird periodisch geprüft, dass das eindeutige Kennzeichen weiterhin vorhanden ist. Das Abrechnungsmodul ruft periodisch neue Nutzungseinheiten ab (nicht notwendigerweise mit der gleichen Periode); wenn keine Nutzungseinheit erhalten wird, so entfernt das Abrechnungsmodul das eindeutige Kennzeichen (beispielsweise durch Löschen aus einer Datei oder einem Überschreiben des gesicherten Datenspeichers mit Nullwerten).

Zweckmäßigerweise erfolgt bei jedem Starten einer Anwendung die Überprüfung des Vorhandenseins einer Anwendungslizenz. Beim gezeigten Beispiel kann neben der Simulationsumgebung SIM auch die Datenbank DBA ausgeführt werden. Hingegen würde eine Abfrage für die Modellierungsumgebung MOD ergeben, dass keine Anwendungslizenz vorhanden ist, weil diese nicht mit dem eindeutigen Kennzeichen KEN 123 verknüpft ist.

Die Erfindung ermöglicht die Lizenzierung von Toolketten aus mehreren Einzelanwendungen mit bestehender Dongle-Lizenzierung, ohne dass an dem Binärcode der einzelnen Anwendungen Änderungen vorgenommen werden müssen. Durch Anpassung des Abrechnungsmoduls, welches wie ein Adapter zwischen dem Container und der Außenwelt wirkt, können verschiedene Lizenzquellen eingesetzt werden. Hierbei wird die Möglichkeit einer Ausführung der Toolkette in dem Container lizenziert bzw. abgerechnet, wodurch eine einfache nutzungsbasierte Lizenzierung für komplexe Anwendungsfälle bereitgestellt werden kann.

## Patentansprüche

1. Verfahren zur nutzungsbasierten Lizenzierung von einer oder mehreren Anwendungen (ANW) in einem Container (CON), wobei der Container (CON) ein Lizenzmodul (LIM) umfasst, wobei eine Anwendung (ANW) das Vorhandensein einer Anwendungslizenz über das Lizenzmodul (LIM) abfragt und die Anwendung nur bei vorhandener Anwendungslizenz ausgeführt wird, wobei in dem Lizenzmodul (LIM) eine Verknüpfung von einer oder mehreren Anwendungslizenzen mit einem eindeutigen Kennzeichen (KEN) hinterlegt ist, wobei der Container (CON) ein Abrechnungsmodul (ABR) umfasst, welches bei einer externen Lizenzquelle eine Nutzungseinheit abruft, **dadurch gekennzeichnet, dass** das Abrechnungsmodul (ABR) für die Dauer einer erhaltenen Nutzungseinheit das eindeutige Kennzeichen (KEN) in einem gesicherten Datenspeicher bereitstellt (DAT), so dass während dieser Zeit die Anwendungen (ANW), deren Anwendungslizenz mit dem eindeutigen Kennzeichen (KEN) verknüpft ist, ausgeführt werden können, wobei das eindeutige Kennzeichen (KEN) mit einer Gültigkeitsdauer versehen ist und nach Ablauf der Gültigkeitsdauer nicht mehr von dem Lizenzmodul (LIM) akzeptiert wird, wobei das Abrechnungsmodul (ABR) periodisch neue Nutzungseinheiten abruft, solange der Container (CON) ausgeführt wird, und wobei das Abrechnungsmodul (ABR) das eindeutige Kennzeichen (KEN) nicht mehr bereitstellt, wenn keine Nutzungseinheit erhalten wurde.

2. Verfahren nach einem der vorhergehenden Ansprüche, wobei das Abrechnungsmodul (ABR) eine abgerufene Nutzungseinheit nur dann als erhaltene Nutzungseinheit akzeptiert, wenn die externe Lizenzquelle sich als vertrauenswürdig authentifiziert.

3. Verfahren nach einem der vorhergehenden Ansprüche, wobei die externe Lizenzquelle abgerufene Nutzungseinheiten protokolliert, so dass ein vorab bereitgestelltes Guthaben verringert wird und/oder eine Abrechnung über die Anzahl verbrauchter Nutzungseinheiten erfolgt.

4. Verfahren nach einem der vorhergehenden Ansprüche, wobei die externe Lizenzquelle als ein Lizenzserver in einem lokalen Netzwerk, als ein kryptografisch gesichertes Hardware-Modul oder als ein Metrik-Software-Modul einer Cloud-Infrastruktur ausgebildet ist.

5. Verfahren nach einem der vorhergehenden Ansprüche, wobei in dem Lizenzmodul (LIM) mindestens zwei Verknüpfungen hinterlegt sind, wobei eine erste Gruppe von Anwendungslizenzen (GRP 1) mit einem ersten eindeutigen Kennzeichen (KEN 123) verknüpft ist und eine zweite Gruppe von Anwendungslizenzen (GRP 2) mit einem zweiten eindeutigen Kennzeichen (KEN 456) verknüpft ist, wobei das Abrechnungsmodul (ABR) eine erste Nutzungseinheit oder eine zweite Nutzungseinheit bei der externen Lizenzquelle abruft, und wobei das Abrechnungsmodul (ABR) je nach abgerufener und erhaltener Nutzungseinheit das erste eindeutige Kennzeichen (KEN 123) oder das zweite eindeutige Kennzeichen (KEN 456) in dem gesicherten Datenspeicher (DAT) bereitstellt.

6. Verfahren nach Anspruch 5, wobei das Abrechnungsmodul (ABR) mehrere Nutzungseinheiten parallel anfordert und entsprechend der erhaltenen Nutzungseinheiten mehrere eindeutige Kennzeichen (KEN) in dem gesicherten Datenspeicher bereitstellt.

7. Computersystem umfassend einen Bedienrechner mit einer Mensch-Maschine-Schnittstelle, einen Lizenzserver als Lizenzquelle und eine Vielzahl von Arbeitsrechnern, wobei jeder Arbeitsrechner einen Prozessor, einen Arbeitsspeicher und eine Schnittstelle umfasst und dazu eingerichtet ist, ein Verfahren gemäß einem der vorhergehenden Ansprüche auszuführen.

8. Computerprogrammprodukt mit einem computerlesbaren Speichermedium, auf dem Befehle eingebettet sind, die, wenn sie von einem System nach Anspruch 7 ausgeführt werden, bewirken, dass das System dazu eingerichtet ist, ein Verfahren gemäß einem der vorhergehenden Ansprüche auszuführen.

## Claims

1. A method for usage-based licensing of one or more applications (ANW) in a container (CON), the container (CON) comprising a license module (LIM), an application (ANW) querying the presence of an application license via the license module (LIM) and the application being executed only if an application license is present, a link of one or more application licenses having a unique identifier (KEN) being stored in the license module (LIM), the container (CON) comprising a billing module (ABR) for retrieving a usage unit from an external license source, **characterized in that** the billing module (ABR) provides the unique identifier (KEN) in a secured data memory (DAT) for the duration of a usage unit received, so that during this time the applications (ANW) having an application license linked to the unique identifier (KEN) can be executed, wherein the unique identifier (KEN) is provided with a validity period and is no longer accepted by the license module (LIM) after the validity period has expired, wherein the billing module (ABR) periodically retrieves new usage units as long as the container (CON) is being executed, and wherein the billing module (ABR) no longer provides the unique identifier (KEN) if no usage unit has been received.

2. The method according to any one of the preceding claims, wherein the billing module (ABR) accepts a retrieved usage unit as a received usage unit only if the external license source authenticates itself as trustworthy.

3. The method according to any one of the preceding claims, wherein the external license source logs retrieved usage units so that a credit provided in advance is reduced and/or billing takes place based on the number of usage units consumed.

4. The method according to any one of the preceding claims, wherein the external license source is implemented as a license server in a local network, as a cryptographically secured hardware module, or as a metrics software module of a cloud infrastructure.

5. The method according to any one of the preceding claims, wherein at least two links are stored in the license module (LIM), wherein a first group of application licenses (GRP 1) is linked to a first unique identifier (KEN 123) and a second group of application licenses (GRP 2) is linked to a second unique identifier (KEN 456), wherein the billing module (ABR) retrieves a first usage unit or a second usage unit from the external license source, and wherein the billing module (ABR) provides the first unique identifier (KEN 123) or the second unique identifier (KEN 456) in the secured data memory (DAT) depending on the retrieved and received usage unit.

6. The method according to claim 5, wherein the billing module (ABR) requests a plurality of usage units in parallel and provides a plurality of unique identifiers (KEN) in the secured data memory according to the usage units received.

7. A computer system comprising an operating computer having a human-machine interface, a license server as a license source, and a plurality of working computers, wherein each working computer comprises a processor, a working memory, and an interface, and is configured to execute a method according to any one of the preceding claims.

8. A computer program product having a computer-readable memory medium in which commands are embedded for bringing about, when executed by a system according to claim 7, that the system is configured to perform a method according to any one of the preceding claims.

## Revendications

1. Procédé d'octroi de licences basé sur l'utilisation d'une ou plusieurs applications (ANW) dans un conteneur (CON), le conteneur (CON) comprenant un module de licence (LIM), une application (ANW) interrogeant la présence d'une licence d'application par l'intermédiaire du module de licence (LIM) et l'application n'étant exécutée qu'en cas de présence d'une licence d'application, une association d'une ou de plusieurs licences d'application avec un identificateur univoque (KEN) étant enregistré dans le module de licence (LIM), le conteneur (CON) comprenant un module de facturation (ABR) qui appelle une unité d'utilisation auprès d'une source de licences externe, **caractérisé en ce que** le module de facturation (ABR), pour la durée d'une unité d'utilisation reçue, met à disposition l'identificateur univoque (KEN) dans une mémoire de données (DAT) sécurisée, de sorte que pendant ce temps, les applications (ANW) dont la licence d'application est associée à l'identificateur univoque (KEN) peuvent être exécutées, l'identificateur univoque (KEN) étant pourvu d'une durée de validité et n'étant plus acceptée par le module de licence (LIM) après l'expiration de la durée de validité, le module de facturation (ABR) appelant périodiquement de nouvelles unités d'utilisation tant que le conteneur (CON) est exécuté, et le module de facturation (ABR) ne mettant plus à disposition l'identificateur univoque (KEN) lorsqu'aucune unité d'utilisation n'a été reçue.

2. Procédé selon l'une des revendications précédentes, le module de facturation (ABR) acceptant une unité d'utilisation appelée en tant qu'unité d'utilisation reçue uniquement si la source de licences externe s'authentifie comme étant digne de confiance.

3. Procédé selon l'une des revendications précédentes, la source de licences externe journalisant les unités d'utilisation appelées, de sorte qu'un crédit mis à disposition au préalable est réduit et/ou qu'une facturation est effectuée sur le nombre d'unités d'utilisation consommées.

4. Procédé selon l'une des revendications précédentes, la source de licences externe étant réalisée sous la forme d'un serveur de licences dans un réseau local, d'un module matériel sécurisé par cryptographie ou d'un module logiciel d'indice de mesure d'une infrastructure en nuage.

5. Procédé selon l'une des revendications précédentes, au moins deux associations étant enregistrées dans le module de licence (LIM), un premier groupe de licences d'application (GRP 1) étant associé à un premier identificateur univoque (KEN 123) et un deuxième groupe de licences d'application (GRP 2) étant associé à un deuxième identificateur univoque (KEN 456), le module de facturation (ABR) appelant une première unité d'utilisation ou une deuxième unité d'utilisation auprès de la source de licences externe, et le module de facturation (ABR) mettant à disposition le premier identificateur univoque (KEN 123) ou le deuxième identificateur univoque (KEN 456) dans la mémoire de données sécurisée (DAT), en fonction de l'unité d'utilisation appelée et reçue.

6. Procédé selon la revendication 5, le module de facturation (ABR) demandant parallèlement plusieurs unités d'utilisation et mettant à disposition plusieurs identificateurs univoques (KEN) dans la mémoire de données sécurisée en fonction des unités d'utilisation reçues.

7. Système informatique comprenant un ordinateur de commande avec une interface homme-machine, un serveur de licences comme source de licences et une pluralité d'ordinateurs de travail, chaque ordinateur de travail comprenant un processeur, une mémoire de travail et une interface et étant configuré pour mettre en œuvre un procédé selon l'une des revendications précédentes.

8. Produit de programme informatique comprenant un support de stockage lisible par ordinateur sur lequel sont incorporées des instructions qui, lorsqu'elles sont exécutées par un système selon la revendication 7, font que le système soit configuré pour mettre en œuvre un procédé selon l'une des revendications précédentes.
